# EUROPEAN PATENT APPLICATION

(11) **EP 4 697 623 A1**
(43) Date of publication of application: **18.02.2026**
(21) Application number: 24194506.2
(22) Date of filing: 14.08.2024
(51) Int. Cl.: H04B 10/2575, H04B 10/272

(54) **OPTICAL NETWORK ROUTING DEVICE AND SYSTEM**

(71) Applicant: Ezconn Corporation, New Taipei City 251 (TW)
(72) Inventor: Chou, Yu-Te, New Taipei City, R.O.C. (TW); Lan, Chin-Yin, New Taipei City, R.O.C. (TW); CHIEN, MING FENG, New Taipei City, R.O.C. (TW)
(74) Representative: dompatent

(57) **Abstract**

An optical network routing device, which is disposed outside a space surrounded by walls, includes an optical transceiver (111), an optical-to-electrical signal converter (112) and at least one first telecommunication signal port (113). The optical transceiver (111) is configured to receive an optical signal. The optical-to-electrical signal converter (112) is connected to the optical transceiver (111) and is configured to convert the optical signal into a telecommunication signal. The at least one first telecommunication signal port (113) is connected to the optical-to-electrical signal converter (112) for transmitting the telecommunication signal to at least one second telecommunication signal port (12) located in the space, wherein the at least one first telecommunication signal port (113) complies with a home network communication protocol corresponding to the at least one second telecommunication signal port (12).

## Description

### BACKGROUND

### 1. Technical Field

This disclosure relates to an optical network routing device and system.

### 2. Related Art

Conventional home installation of fiber optic cables requires drilling holes in the walls and then threading the fiber optic cables through these holes to connect them to the home's fiber optic network routing devices, such as routers or wireless base stations. This enables residents to enjoy the fast and convenient benefits of fiber optic cable networks.

However, due to the aging of many homes or poor quality of the walls themselves, the drilling process can often cause extensive damage to the walls. Additionally, some customers are concerned that drilling holes in the walls may negatively impact the aesthetics of their homes, leading them to avoid this procedure. If relying solely on mobile communication technology, such as 5G, the signal quality can be affected by weather conditions or other factors, resulting in poor signal performance. Moreover, in certain areas, the cellular network infrastructure may be sparse or outdated, depriving residents of the convenience of modern communication technology. Furthermore, at times, the cost of mobile communication technology is higher than that of regular fiber cable networks, which contributes to residents' hesitation in adopting it.

Therefore, there is a pressing need for innovative and creative technologies to address the aforementioned issues.

### SUMMARY

Accordingly, this disclosure provides an optical network routing device and system.

According to one or more embodiment of this disclosure, an optical network routing device, which is disposed outside a space surrounded by walls, includes an optical transceiver, an optical-to-electrical signal converter and at least one first telecommunication signal port. The optical transceiver is configured to receive an optical signal. The optical-to-electrical signal converter is connected to the optical transceiver and is configured to convert the optical signal into an telecommunication signal. The at least one first telecommunication signal port is connected to the optical-to-electrical signal converter for transmitting the telecommunication signal to at least one second telecommunication signal port located in the space, wherein the at least one first telecommunication signal port complies with a home network communication protocol corresponding to the at least one second telecommunication signal port.

According to one or more embodiment of this disclosure, an optical network routing system includes the optical network routing device as described above, the at least one second telecommunication signal port and a user terminal device. The at least one second telecommunication signal port is connected to the at least one first telecommunication signal port. The user terminal device is disposed in the space and includes a processor and a network port. The processor is connected to the at least one second telecommunication signal port and is configured to obtain a network signal according to the telecommunication signal. The network port is connected to the processor and configured to output the network signal.

In view of the above description, the optical network routing device and system of the present disclosure may convert the optical fiber network signal into the telecommunication signal through the optical transceiver and the optical-to-electrical signal converter installed outside a space surrounded by walls, and transmit the telecommunication signal to the second telecommunication port in the space through a first telecommunication signal port that complies with the home network communication protocol, so as to provide the network signal for users/residents. Therefore, the optical network routing device and system of the present disclosure may be integrated with the user's/resident's existing home network communication protocol connection line, and avoid damage or additional construction to the wall while ensuring that the user/resident may receive a stable optical fiber network signal.

The above description of the present disclosure and the following description of the embodiments are used to demonstrate and explain the spirit and principles of the present invention, and provide a further explanation of the patent application scope of the present invention.

### BRIEF DESCRIPTION OF THE DRAWINGS

The present disclosure will become more fully understood from the detailed description given hereinbelow and the accompanying drawings which are given by way of illustration only and thus are not limitative of the present disclosure and wherein:
FIG. 1 is a block diagram of an optical network routing device according to an embodiment of the present disclosure;
FIG. 2 is a block diagram of an optical network routing system according to an embodiment of the present disclosure;
FIG. 3 schematically shows the configuration of an optical network routing device according to an embodiment of the present disclosure; and
FIG. 4 is a schematic diagram of an optical network routing device according to an embodiment of the present disclosure.

### DETAILED DESCRIPTION

In the following detailed description, for purposes of explanation, numerous specific details are set forth in order to provide a thorough understanding of the disclosed embodiments. According to the description, claims and the drawings disclosed in the specification, one skilled in the art may easily understand the concepts and features of the present invention. The following embodiments further illustrate various aspects of the present invention, but are not meant to limit the scope of the present invention.

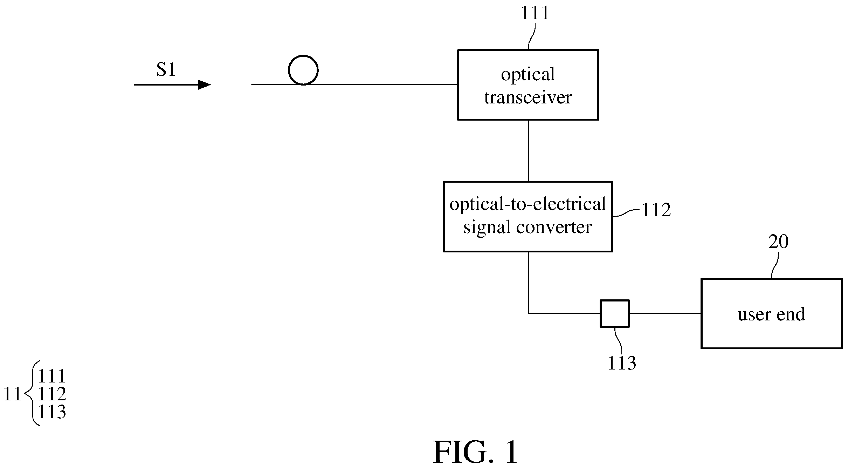

The optical network routing device 11 may be disposed outside a space surrounded by walls, and configured to provide the network signal for users/residents, wherein the space may be the living space of the users/residents. Please refer to FIG. 1, which is a block diagram of an optical network routing device according to an embodiment of the present disclosure. As shown in FIG. 1, the optical network routing device 11 may include an optical transceiver 111, an optical-to-electrical signal converter 112 and at least one first telecommunication signal port 113. The optical transceiver 111 is configured to receive an optical signal. The optical-to-electrical signal converter 112 is connected to the optical transceiver 111 and is configured to convert the optical signal into an telecommunication signal. The at least one first telecommunication signal port 113 is connected to the optical-to-electrical signal converter 112 for transmitting the telecommunication signal to at least one second telecommunication signal port located in the space, wherein the at least one first telecommunication signal port 113 complies with a home network communication protocol corresponding to the at least one second telecommunication signal port.

In the present embodiment, the optical transceiver 111 may receive the optical fiber network signal S1 through the optical fiber network, and the optical fiber network signal S1 may be transmitted from an optical line terminal (OLT) and an optical splitter. The optical transceiver 111 may transmit the optical signal to the optical-to-electrical signal converter 112 and support a data transmission rate of 1Gbps-25Gbps. The optical-to-electrical signal converter 112 is connected to the optical transceiver 111 and is configured to convert the optical signal into an telecommunication signal, and transmit the telecommunication signal to the user end 20 through the first telecommunication signal port 113 to provide the user indoor with a network signal. The first telecommunication port 113 may comply with a home network communication protocol corresponding to the second telecommunication port, such as the G.hn communication protocol. Specifically, the optical-to-electrical signal converter 112 may include a laser diode, a laser driver and a photodiode. The laser diode may be configured to generate the optical signal. The laser driver may be connected to the laser diode and configured to drive the laser diode. The photodiode may be configured to receive the optical signal.

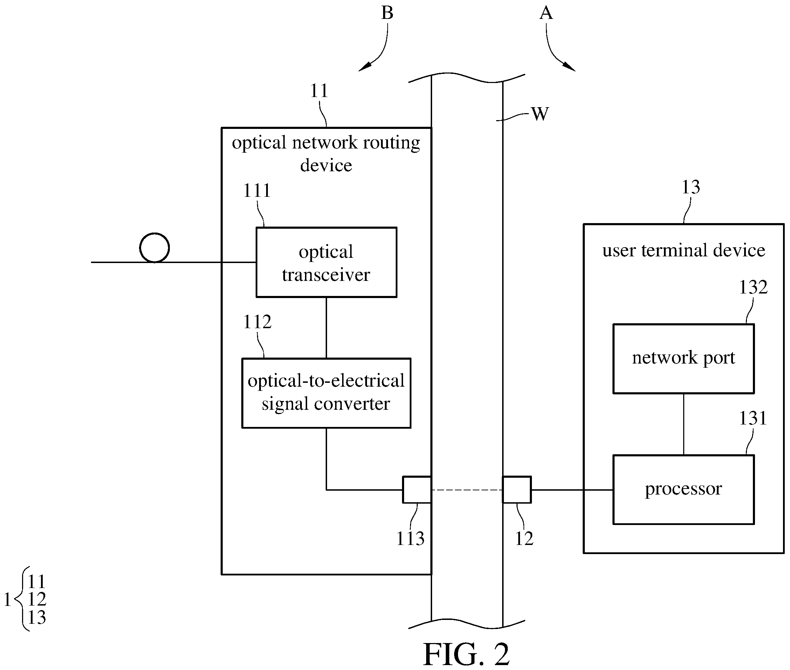

Please refer to FIG. 2 along with FIG. 1, FIG. 2 is a block diagram of an optical network routing system according to an embodiment of the present disclosure. The optical network routing system 1 may include the optical network routing device 11 as described above, the at least one second telecommunication signal port 12 and a user terminal device 13. The at least one second telecommunication signal port 12 is connected to the at least one first telecommunication signal port 113. The user terminal device 13 is disposed in the space A and includes a processor 131 and a network port 132. The processor 131 is connected to the at least one second telecommunication signal port 12 and is configured to obtain a network signal according to the telecommunication signal. The network port 132 is connected to the processor 131 and configured to output the network signal.

As shown in FIG. 2, the optical network routing device 11 may be disposed outside the space A surrounded by walls W, and configured to provide network signal for users/residents. That is, the optical network routing device 11 may be installed in the outdoor space B. For example, the optical transceiver 111, the optical-to-electrical signal converter 112 and the first telecommunication signal port 113 of the optical network routing device 11 may be installed in an electrical box in the outdoor space B. Specifically, an optical network routing device 11 may be a communication unit among a plurality of multiple dwelling units (MDUs). That is, the optical line terminal may be connected to each communication unit among the MDUs through optical splitters, and each communication unit (each optical network routing device 11) may correspond to a household and be used to provide the network signal for the user/resident.

In the present embodiment, the first telecommunication port 113, the second telecommunication port 12 and the lines connected between them are based on the G.hn communication protocol. Although the number of each of the first telecommunication signal port 113 and the second telecommunication signal port 12 are shown to be one in the figure, the present disclosure is not limited thereto. For example, the at least one first telecommunication signal port 113 and the at least one second telecommunication signal port 12 may be applicable to one or more of power line, coaxial line, telephone line or plastic optical fiber line. The second telecommunication signal port 12 disposed in the indoor space A may be the G.hn connection port originally constructed on the user end, and is electrically connected to the first telecommunication signal port 113 disposed in the outdoor space B through wiring. With this configuration, the fiber optic network does not need to cross the wall to provide the network signal to the user end, but adopts a combination solution that is compatible with the G.hn port used by the user itself to achieve the effect of providing network signals.

The user terminal device 13 may be a G.hn user terminal device, which has at least one G.hn connection port to receive the telecommunication signal from the second telecommunication signal port 12. The processor 131 may be one or more processing/control units with data receiving, recording, computing, storage and output functions, and the processing/control unit is, for example, a microcontroller, a central processing unit, a graphics processor, a programmable logic controller, or any combination of the above. After generating a network signal based on the telecommunication signal, the processor 131 may output the network signal to other routers or sharing devices through the network port 132. Network port 132 may be an Ethernet port.

The configuration of FIG. 2 may be integrated into a variety of usage scenarios. For example, the optical network routing device 11 may be installed on one floor (for example, first floor) of a building, the user terminal device 13 may be installed on another floor of the building (for example, basement), and the optical network routing device 11 and the user terminal device 13 may be connected to each other through the first connection port 113 and the second connection port 12. After the network signal is transmitted through the router or sharing device, the network signal may be assigned to multiple terminal devices through a coaxial line by a G.hn switch to form a point-to-point network sharing. Thereby, the router or sharing device and the terminal device may have a master/slave relationship and form an Internet of Things (IoT) system. For example, the terminal device described above may include television, air conditioner, lamps, various sensor, alarm, etc. in the user's home. Users may, through the router or sharing device, connect to the Internet through a personal device (e.g. a smartphone) to control the terminal devices at home or obtain their respective current information. Specifically, in general, an additional network cable connected to the MOD set-top box is essential for the TV using MOD set-top boxes. However, through the above solution, network signals may be transmitted through existing indoor G.hn lines (for example, power lines) without the need to connect additional network lines. In addition, the above solution may also provide the network signals to vehicles in basement garages that usually cannot receive signals. For example, by inserting the extender into the electric vehicle charging box, the network signal provided by the router or sharing device may be obtained. The router or sharing device described above may also be connected to the doorbell to provide the user/resident with the sound signals and images obtained by the doorbell in real time.

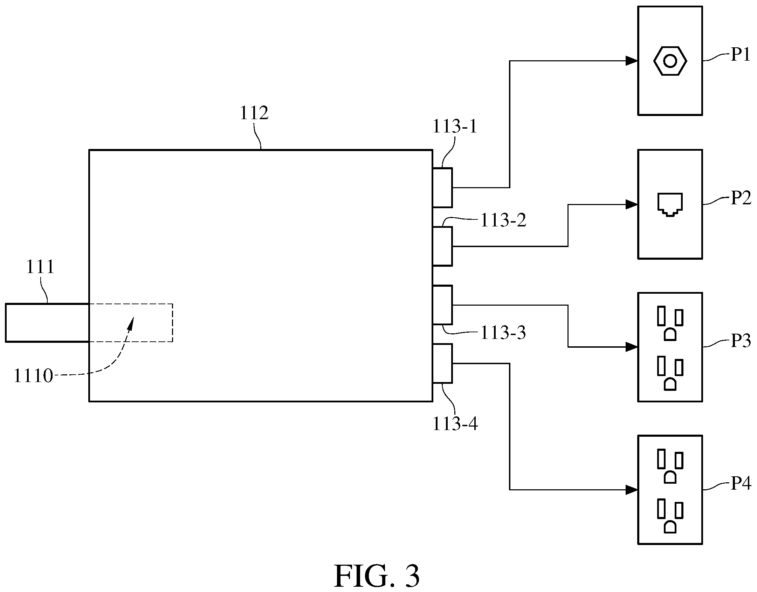

Please refer to FIG. 3 which schematically shows the configuration of an optical network routing device according to an embodiment of the present disclosure. As shown in FIG. 3, the optical transceiver 111 may be pluggable and embedded on a printed circuit board, and may include a small form-factor pluggable (SFP) connection port 1110, and be connected to the optical-to-electrical signal converter 112 through the SFP connection port 1110. For example, the optical transceiver 111 may be implemented with "XGSPON ONU Stick". The optical-to-electrical signal converter 112 may include a plurality of first connection ports 113-1, 113-2, 113-3 and 113-4, wherein the first connection port 113-1 may be connected to the coaxial line connection port P1 of G.hn, the first connection port 113-2 may be connected to the telephone line connection port P2 of G.hn, the first connection port 113-3 may be connected to the power line connection port P3 of G.hn, and the first connection port 113-4 may be connected to the power line connection port P4 for providing AC power required by the optical-to-electrical signal converter 112. Specifically, in practice, G.hn connection ports may be set up in the outdoor space of the user end according to actual needs, and the connection ports P1 to P4 described above may be connected to the indoor space of the user end. For example, any of the G.hn-based connection ports P1 to P3 may be connected to the second telecommunication signal port 12, and the first connection port 113-4 may be connected to a power supply provided at the user end.

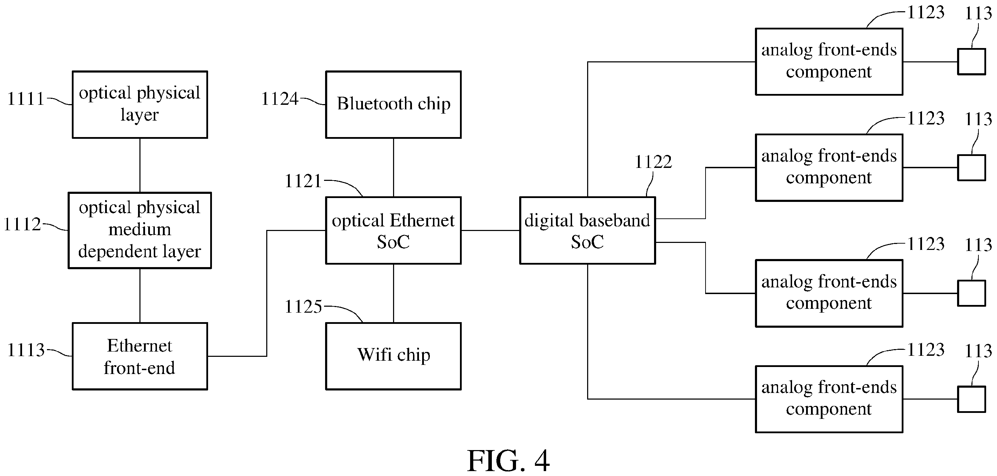

Please refer to FIG. 4 which is a schematic diagram of an optical network routing device according to an embodiment of the present disclosure. As shown in FIG. 4, the optical transceiver 111 may include an optical physical layer (PHY) 1111, an optical physical medium dependent layer (PMD) 1112, and an Ethernet front end 1113. For example, the optical physical layer 1111 may include an optical fiber for transmitting the optical signal, a laser diode for generating the optical signal, and a photodiode for generating an electrical signal, and this electrical signal can be further processed to generate the telecommunication signal. The optical physical medium dependent layer 1112 is connected to the optical physical layer 1111 and is configured to determine the transmission specification of the optical signal. The Ethernet front-end 1113 is connected to the optical physical medium dependent layer 1112 and the optical-to-electrical signal converter 112. In addition, the optical transceiver 111 may include an optical subassembly (OSA). For example, the optical subassembly may be divided into a transceiver optical subassembly (TOSA) and a receiver optical subassembly (ROSA) according to its usage, and are connected to the laser diode and the photodiode respectively. The optical transceiver 111 may include a processing unit for determining transmission specifications of the optical signals and the telecommunication signals and processing the signals. In addition, the optical transceiver 111 may support point-to-point (P2P) and multiple-point-to-point communication protocols.

The optical-to-electrical signal converter 112 includes an optical Ethernet system-on-chip (SoC) 1121, a digital baseband system-on-chip (SoC) 1122 and at least one analog front-end component (AFE) 1123, and optionally includes a Bluetooth chip 1124 or/and a wireless network (Wifi) chip 1125. The optical Ethernet SoC 1121 is connected to the optical transceiver 111. The digital baseband SoC 1122 is connected to the optical Ethernet SoC 1121. The at least one analog front-end component 1123 are connected to the digital baseband SoC 1122, and are respectively connected to at least one first telecommunication signal port 113. The digital baseband SoC 1122 may be a G.hn digital baseband SoC. Each of the at least one analog front-end component 1123 may be configured for fiber optic line communication, coaxial line communication, telephone line communication, and power line communication, wherein the analog front-end component 1123 corresponding to the power line may transmit signals based on power line communication (PLC).

In view of the above description, the optical network routing device and system of the present disclosure may convert the optical fiber network signal into the telecommunication signal through the optical transceiver and the optical-to-electrical signal converter installed outside a space surrounded by walls, and transmit the telecommunication signal to the second telecommunication port in the space through a first telecommunication signal port that complies with the home network communication protocol, so as to provide the network signal for users/residents. Therefore, the optical network routing device and system of the present disclosure may be integrated with the user's/resident's existing home network communication protocol connection line, and avoid damage or additional construction to the wall while ensuring that user/resident may receive a stable optical fiber network signal.

Although the present invention is disclosed in the foregoing embodiments, they are not intended to limit the present invention. All changes and modifications made without departing from the spirit and scope of the present invention shall fall within the scope of patent protection of the present invention. Regarding the protection scope defined by the present invention, please refer to the attached claims.

## Claims

1. An optical network routing device, disposed outside a space surrounded by walls, comprising:
an optical transceiver (111) configured to receive an optical signal;
an optical-to-electrical signal converter (112) connected to the optical transceiver (111), and configured to convert the optical signal into a telecommunication signal; and
at least one first telecommunication signal port (113) connected to the optical-to-electrical signal converter (112), and configured to transmit the telecommunication signal to at least one second telecommunication signal port (12) located in the space, wherein the at least one first telecommunication signal port (113) complies with a home network communication protocol corresponding to the at least one second telecommunication signal port (12).

2. The optical network routing device of claim 1, wherein the home network communication protocol is G.hn communication protocol.

3. The optical network routing device of claim 2, wherein the at least one first telecommunication signal port (113) and the at least one second telecommunication signal port (12) are applicable to one or more of power line, coaxial line, telephone line or plastic optical fiber line.

4. The optical network routing device of claim 1, wherein the optical transceiver (111) comprises an SFP connection port.

5. The optical network routing device of claim 1, wherein the optical transceiver (111) supports a data transmission rate of 1 Gbps to 25Gbps.

6. The optical network routing device of claim 1, wherein the optical transceiver (111) is pluggable and embedded on a printed circuit board.

7. The optical network routing device of claim 1, wherein the optical transceiver (111) comprises:
an optical physical layer (1111) configured to transmit the optical signal;
an optical physical medium (1112) dependent layer connected to the optical physical layer (1111), and configured to determine transmission specification of the optical signal; and
an Ethernet front-end (1113) connected to the optical physical medium dependent layer (1112) and the optical-to-electrical signal converter (112).

8. The optical network routing device of claim 1, wherein the optical-to-electrical signal converter (112) comprises:
a laser diode configured to generate the optical signal;
a laser driver connected to the laser diode, and configured to drive the laser diode; and
a photodiode configured to receive the optical signal.

9. The optical network routing device of claim 1, wherein the optical-to-electrical signal converter (112) comprises:
an optical Ethernet system-on-chip (1121) connected to the optical transceiver (111);
a digital baseband system-on-chip (1122) connected to the optical Ethernet system-on-chip (1121); and
at least one analog front-ends component (1123) connected to the digital baseband system-on-chip (1122), and respectively connected to the at least one first telecommunication signal port (113).

10. An optical network routing system, comprising:
the optical network routing device of claim 1;
the at least one second telecommunication signal port (12) connected to the at least one first telecommunication signal port (113); and
a user terminal device (13) disposed in the space and comprising:
a processor (131) connected to the at least one second telecommunication signal port (12) and configured to obtain a network signal according to the telecommunication signal; and
a network port (132) connected to the processor (131) and configured to output the network signal.
